# EUROPÄISCHE PATENTSCHRIFT

(11) **EP 1 947 538 B1**
(45) Veröffentlichungstag und Bekanntmachung des Hinweises auf die Patenterteilung: **09.03.2011**
(21) Anmeldenummer: 07405014.7
(22) Anmeldetag: 18.01.2007
(51) Int. Cl.: G05B 19/409

(54) **Verfahren zum Ansteuern eines verfahrbaren Werkzeugs, Eingabevorrichtung sowie Bearbeitungsmaschine**
Method for controlling a moveable tool, input device and processing machine
Procédé de commande d'un outil mobile, dispositif d'introduction tout comme machine de traitement

(43) Veröffentlichungstag der Anmeldung: 23.07.2008
(73) Patentinhaber: Fritz Studer AG, 3612 Steffisburg (CH)
(72) Erfinder: Gaegauf Alfred, CH-3665 Wattenwil (CH); Abbühl Martin, CH-3604 Thun (CH)
(74) Vertreter: AMMANN PATENTANWÄLTE AG BERN

(56) Entgegenhaltungen:
- US-B1- 6 234 869

## Beschreibung

Die vorliegende Erfindung bezieht sich auf ein Verfahren zum Ansteuern eines verfahrbaren Werkzeugs, auf eine Eingabevorrichtung zum Durchführen eines derartigen Verfahrens sowie auf eine Bearbeitungsmaschine mit einer derartigen Eingabevorrichtung.

Es sind Bearbeitungsmaschinen bekannt, welche eine präzise Bearbeitung eines Werkstücks ermöglichen, indem das Werkzeug gesteuert verfahren wird. Die zeitliche Position des Werkzeugs ist dabei durch die Zustellfunktion festgelegt, welche entsprechend den gewünschten Werkstückgeometrien vorzugeben ist. Es können jedoch nur relativ einfache Zustellfunktionen vorgegeben werden. Bei Schleifmaschinen beispielsweise kann der Benutzer durch Drehen an Potentiometern Werte für verschiedene Positionen der Schleifscheibe wie Kontaktposition, wo die Schleifscheibe auf das Werkstück trifft, Umschaltposition, wo die Werkstoffabtragung durch Schlichten einsetzt, und Endposition, wo die Schleifscheibe das Endmass erreicht, sowie Werte für die jeweilige Verfahrgeschwindigkeit der Schleifscheibe zwischen zwei Positionen definieren.

Im Weiteren ist die Vorgabe der Zustellfunktion dadurch erschwert, dass bei der Eingabe der Werte leicht Fehler passieren können und dass das genaue Festlegen der einzelnen Werte eine gewisse Erfahrung vom Benutzer erfordert, um die gewünschten Genauigkeiten beim bearbeiteten Werkstück zu erreichen.

Die US 6,234,869 B1 offenbart ein Verfahren gemäss Oberbegriff des Anspruchs 1.

Ausgehend von diesem Stand der Technik liegt eine Aufgabe der vorliegenden Erfindung darin, die Eingabe einer Zustellfunktion zu vereinfachen und flexibler zu gestalten und ein Verfahren, eine Eingabevorrichtung sowie eine Bearbeitungsmaschine anzugeben, welches bzw. welche eine derart verbesserte Eingabe der Zustellfunktion ermöglicht.

Diese Aufgabe wird durch das Verfahren gemäss Anspruch 1, die Eingabevorrichtung gemäss Anspruch 6 bzw. die Bearbeitungsmaschine gemäss Anspruch 8 gelöst. Die weiteren Ansprüche geben bevorzugte Ausführungen sowie ein Computerprogramm und einen Datenträger an.

Das erfindungsgemässe Verfahren sowie die erfindungsgemässe Eingabevorrichtung und Bearbeitungsmaschine haben u.a. den Vorteil, dass auf einfache und zuverlässige Weise selbst kompliziertere Zustellfunktionen eingegeben werden können, ohne dass dabei eine aufwändige Programmierung durch den Benutzer erforderlich ist. Die Erfindung basiert u.a. auf der Erkenntnis, dass es für diesen einfacher ist, anhand einer graphischen Darstellung der Zustellfunktion - und nicht anhand einzelner numerischer Werte - den Verlauf des Bearbeitungsprozesses zu erfassen und zu beurteilen.

Die Erfindung wird im Folgenden anhand eines bevorzugten Ausführungsbeispiels unter Bezugnahme auf Figuren erläutert.
Es zeigen
Fig. 1 eine graphische Darstellung einer Zustellfunktion bekannter Art;
Fig. 2 schematisch eine Eingabevorrichtung zur Erzeugung einer Zustellfunktion;
Fig. 3 schematisch einen Monitor mit einer graphischen Darstellung von Zustellfunktionen;
Fig. 4 - 7 verschiedene Beispiele von graphischen Veränderungen einer Zustellkurve;
Fig. 8 den Monitor gemäss Fig. 3 mit veränderten Zustellkurven; und
Fig. 9 eine Bearbeitungsmaschine mit einer Eingabevorrichtung gemäss Fig. 2.

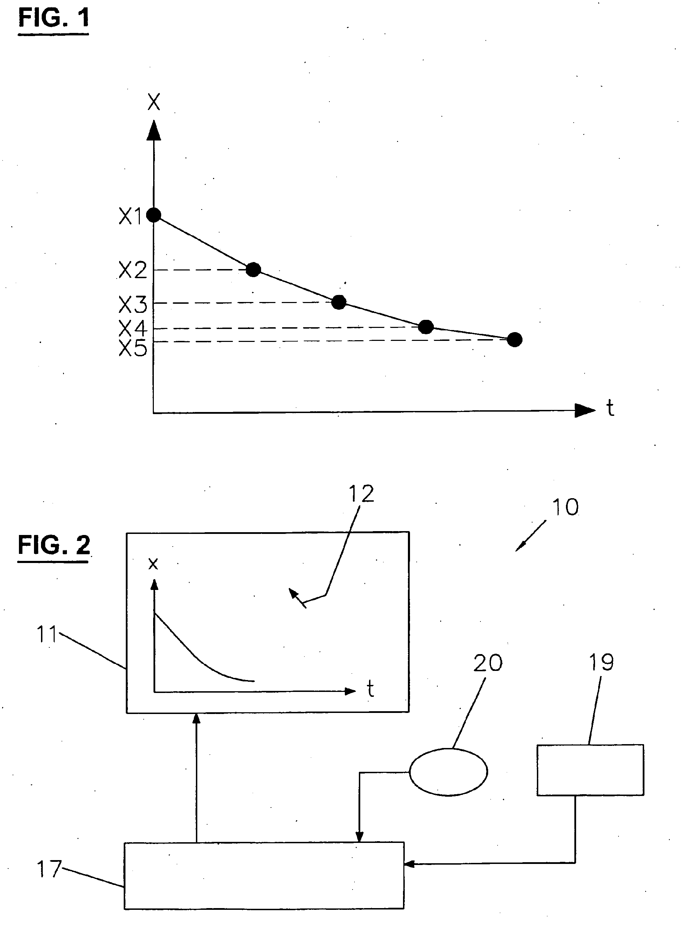

Fig. 1 zeigt eine graphische Darstellung einer Zustellfunktion bekannter Art. Die Abszisse t entspricht der Zeitachse, die Ordinate X gibt die Position des Werkzeugs auf der X-Achse an.

Zum Festlegen der Zustellfunktion werden einzelne Werte für die Position des Werkzeugs X1, X2, X3, X4, X5 sowie die jeweilige Verfahrgeschwindigkeit V1, V2, V3, V4 vorgegeben, mit welcher das Werkzeug zwischen den jeweiligen Positionen, d.h. zwischen X1 und X2, X2 und X3, X3 und X4 sowie X4 und X5 verfahren werden soll. Ist das Werkzeug beispielsweise eine Schleifscheibe, so entspricht X1 z.B. der Kontaktposition, wo das Werkzeug auf die Werkstückoberfläche trifft, X2 einer ersten Umschaltposition, ab welcher Material durch Schruppen abgetragen wird, X3 einer zweiten Umschaltposition, ab welcher der Materialabtrag durch Schlichten erfolgt, X4 einer dritten Umschaltposition, ab welcher das Feinschlichten einsetzt, und X5 der Endposition, wo das Werkzeug das Endmass erreicht. Die Verfahrgeschwindigkeiten V1, V2, V3, V4 sind jeweils konstant, sodass die Zustellung des Werkzeugs zwischen den Positionen linear erfolgt. Wie aus Fig. 1 ersichtlich, ergibt sich somit in der graphischen Darstellung eine Zustellfunktion, die sich aus einzelnen geraden Strecken zusammensetzt. Die jeweilige Steigung einer Strecke entspricht dabei der Verfahrgeschwindigkeit V1, V2, V3 bzw. V4.

Fig. 2 zeigt schematisch eine Eingabevorrichtung 10, mittels welcher eine Zustellfunktion erzeugbar ist und welche einen Monitor 11, einen Computer 17, eine Tastatur 19 und ein Zeigegerät 20 in Form einer Computer-Maus umfasst.

Das Zeigegerät 20 (in Englisch "pointing device") dient zur Steuerung eines Monitorcursors 12, um z.B. bestimmte Punkte oder Bereiche zu markieren oder Menüelemente auszuwählen. Durch Bewegen des Zeigegeräts 20 wird die Position des Monitorcursors 12 entsprechend verändert.

Der Computer 17 ist in üblicher Weise ausgestaltet und enthält zur Datenverarbeitung eine Zentraleinheit (CPU) und einen Speicher, z.B. in Form eines Schreib-Lese-Speichers (RAM) und/oder einer Harddisk. Während des Betriebes empfängt der Computer 17 Daten vom Zeigegerät 20 und gegebenenfalls von der Tastatur 19, wertet die Daten aus und erzeugt Monitorsignale, welche vom Monitor 11 empfangen werden. Der Computer 17 enthält dazu ein geeignetes Graphikprogramm zum Auswerten der Daten vom Zeigegerät 20 und von der Tastatur 19 und zum Erzeugen von Monitorsignalen, welche eine Darstellung der Zustellfunktion in Form einer Kurve auf dem Monitor 11 bewirken.

Die Zustellfunktion legt die zeitliche Bewegung eines Werkzeugs fest, wobei für jede Achse, entlang welcher dieses gesteuert verfahrbar ist, eine Zustellkurve vorzugeben ist. Ist z. B. das Werkzeug entlang der X-, Y- und Z-Achse verfahrbar, stellt die Zustellfunktion eine dreiwertige Funktion (X(t), Y(t), Z(t)) dar. Bei einer einfacheren Ansteuerung ist die Bewegung des Werkzeugs entlang weniger als drei Achsen definierbar, sodass nur eine Zustellkurve, z.B. X(t), oder zwei Zustellkurven, z.B. X(t) und Z(t), einzugeben sind.

In der Regel sind mehrere Bearbeitungsschritte erforderlich, um ein Werkstück mit der gewünschten Geometrie anzufertigen. Beispielsweise werden am Werkstück schrittweise verschiedene Bereiche geschliffen, wie zylindrische Flächen, linke und rechte Schultern, Gewinde, etc., indem die Schleifscheibe in geeigneter Weise verfahren wird (Längsschleifen, Einstechschleifen, etc.). Beim hier beschriebenen Verfahren ist jeder mögliche Bearbeitungsschritt durch eine Basiszustellfunktion charakterisiert, welche aufgrund von Erfahrungswerten vorgegeben werden kann. Damit das Graphikprogramm auf die Basiszustellfunktionen zugreifen kann, sind diese in einer Sammlung zusammengefasst, die im Speicher des Computers 17 enthalten ist. Anstelle einer derartigen Sammlung oder ergänzend zu dieser kann das Graphikprogramm einen Modellierbereich umfassen, mittels welchem der Computer 17 anhand von eingegebenen Daten die jeweilige Basiszustellfunktion modelliert.

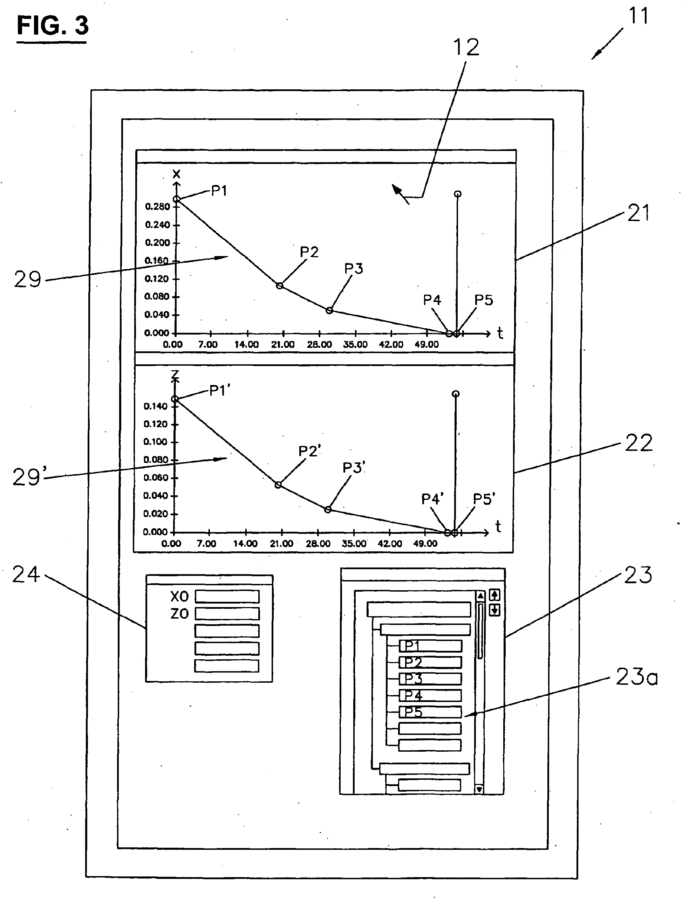

Im Folgenden wird die Eingabe der Zustellfunktion für ein Werkzeug in Form einer Schleifscheibe erläutert, die in der X- und Z-Achse gesteuert verfahrbar ist. Fig. 3 zeigt schematisch einen Monitor 11 mit verschiedenen geöffneten Fenstern 21 - 24.

In den Fenstern 21 und 22 ist die aktuelle Zustellfunktion in Form von Zustellkurven 29, 29' dargestellt. Die Abszisse t der jeweiligen Zustellkurve 29, 29' entspricht der Zeitachse, die Ordinate gibt die Position des Werkzeugs auf der X-Achse bzw. Z-Achse an. Der Nullpunkt der X-Achse und Z-Achse entspricht der Endposition, bei welcher das Werkzeug das Endmass erreicht hat.

Das Fenster 23 zeigt ein Auswahlmenü, in welchem die möglichen Bearbeitungsschritte aufgelistet sind. Ein einzelner Bearbeitungsschritt ist z.B. durch folgende Parameter charakterisiert: die Beschaffenheit der einzusetzenden Schleifscheibe, die Art der zu bearbeitenden Fläche (z.B. linke Schulter, rechte Schulter, etc.) und die Weise, in welcher die Schleifscheibe zugestellt werden soll (z.B. Geradeeinstechen, Schrägeinstechen, etc.). Informationen zu diesen Parametern sind in Feldern 23a des Auswahlmenüs angegeben. Durch Bedienen des Zeigegeräts 20 kann der Benutzer den gewünschten Bearbeitungsschritt auswählen.

Das Fenster 24 enthält Eingabefelder, in welche der Benutzer mittels der Tastatur 19 Daten eingeben kann, u.a. die Masse für den zu bearbeiten Werkstückbereich wie das Anfangsmass und das gewünschte Endmass.

Nach Auswählen des Bearbeitungsschritts greift das Graphikprogramm auf die zum Bearbeitungsschritt korrespondierende Basiszustellfunktion in der Sammlung zu, übernimmt diese als Ausgangszustellfunktion und erzeugt Monitorsignale, welche eine Darstellung der Ausgangszustellfunktion in Form einer Ausgangszustellkurve 29 bzw. 29' im Fenster 21 bzw. 22 des Monitors 11 bewirken. Die Kurven 29 und 29' in Fig. 3 zeigen beispielhaft für den Bearbeitungsprozess des Schrägeinstechens die Ausgangszustellkurven für die Zustellung der Schleifscheibe in der X-Achse bzw. Z-Achse. In diesem Beispiel markieren die Punkte P1 - P5 und P1' - P5' auf den Ausgangszustellkurven 29, 29' folgende zeitliche Ereignisse in der Bearbeitung:
- P1, P1':: Die Schleifscheibe befindet sich in der Ausgangsposition. Nach dem Zeitpunkt t = 0 wird die Schleifscheibe auf das Werkstück zubewegt, bis sie auf dessen Oberfläche auftrifft und das Schruppen einsetzt.
- P2, P2':: Die Bearbeitung geht von Schruppen in Schlichten über.
- P3, P3':: Die Bearbeitung geht von Schlichten in Feinschlichten über.
- P4, P4':: Das Ausfunken setzt ein.
- P5, P5':: Die Schleifscheibe wird vom Werkstück abgehoben.

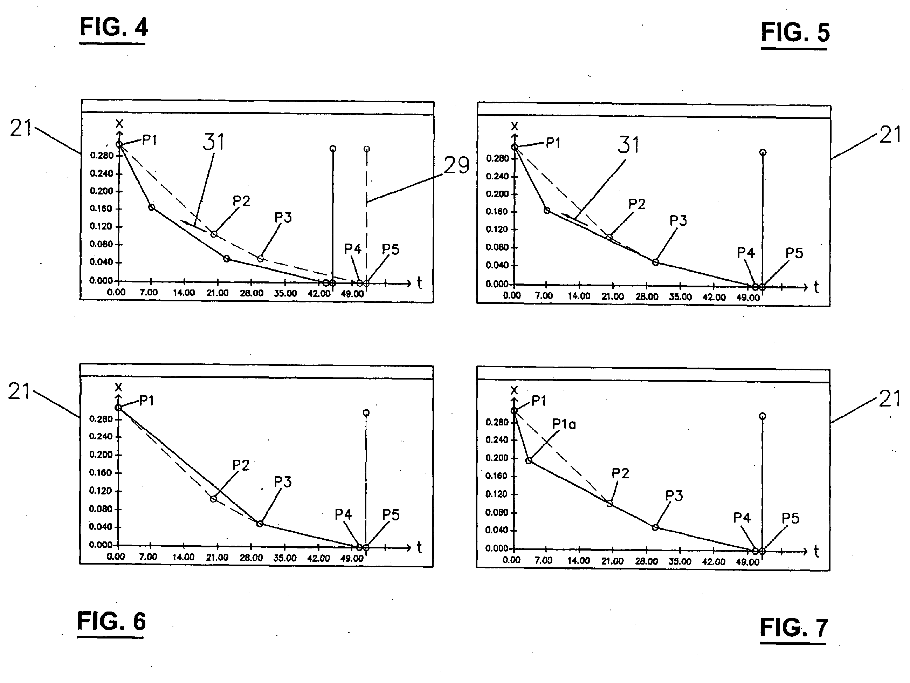

Durch Bedienen des Zeigegeräts 20 kann nun die Ausgangszustellkurve 29, 29' verändert werden. Das Graphikprogramm ist so ausgestaltet, dass verschiedene Möglichkeiten zur Veränderung bereitgestellt sind. In den Fig. 4 - 7 sind vier Beispiele von möglichen Veränderungen gezeigt, wobei jeweils die Ausgangszustellkurve als gestrichelte Linie und die veränderte Kurve als ausgezogene Linie dargestellt sind:
- Ein Punkt, z.B. P2, wird markiert und verschoben, wobei die nachfolgenden Punkte mitverschoben werden (vgl. Fig. 4). Der Pfeil 31 deutet die Richtung an, in welche der Monitorcursor durch Betätigen des Zeigegeräts 20 verschoben wird.
- Ein Punkt, z.B. P2, wird markiert und verschoben, wobei die nachfolgenden Punkte unverändert bleiben (vgl. Fig. 5) .
- Ein Punkt, z.B. P2, wird markiert und gelöscht (vgl. Fig. 6).
- Ein Punkt P1a wird hinzugefügt (vgl. Fig. 7).

Um die Art der Veränderung auszuwählen, wird nebst dem Zeigegerät 20 die Tastatur 19 betätigt. Es ist auch denkbar, das Graphikprogramm so auszugestalten, dass nur mittels Betätigen des Zeigegeräts 20 die Veränderungsart ausgewählt werden kann, indem z.B. ein Auswahlmenü auf dem Monitor 11 angezeigt wird.

In den Fig. 3 - 8 verläuft die Zustellkurve zwischen den Punkten P1 - P5 bzw. P1' - P5' jeweils linear, wobei die Koordinaten der hinzugefügten Punkte P1a, P2a, P1a', P2a' durch den Benutzer vorgeben werden. Optional kann das Graphikprogramm so ausgestaltet sein, dass der Computer 17 die Koordinaten von zusätzlichen Punkten z.B. mittels Verwendung von Spline-Funktionen berechnet. Ist diese Option vorgesehen, so kann der Benutzer die in einem bestimmten zeitbereich liegenden Punkte der Ausgangszustellkurve 29, 29' markieren. Der Computer 17 berechnet dann eine geänderte Ausgangszustellfunktion, indem eine Spline-Funktion durch die markierten Punkte gelegt wird, welche dann in Form eines Polygonzuges mit einer bestimmten Anzahl Punkte auf dem Monitor 11 angezeigt wird.

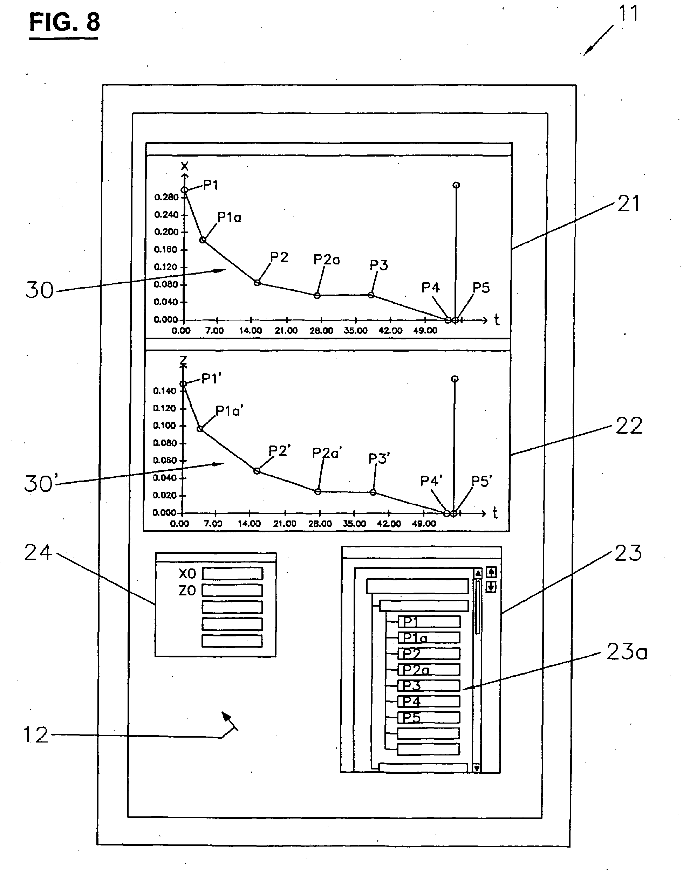

Durch sukzessives Anwenden der verschiedenen Veränderungsarten kann der Benutzer die Ausgangszustellkurve 29, 29' solange anpassen, bis sie der gewünschten Zustellkurve entspricht. Fig. 8 zeigt den Monitor 11 gemäss Fig. 3 mit den veränderten Zustellkurven 30 und 30'. Bei diesem Beispiel wurden bei der Zustellkurve 30 die Punkte P2 und P3 verschoben und die Punkte P1a und P2a hinzugefügt. Zwischen den Punkten P1 und P1a ist somit ein Vorschruppen und zwischen den Punkten P2a und P3 ein erstes Ausfunken vor dem Finish vorgesehen. Angaben zu den hinzugefügten Punkten P2a und P1a werden automatisch durch das Graphikprogramm in den Feldern 23a des Auswahlmenüs angezeigt.

Im vorliegenden Beispiel ist das Werkzeug in zwei Achsen verfahrbar, wobei die räumliche Bewegung entsprechend dem ausgewählten Bearbeitungsschritt zeitlich gekoppelt ist. Soll z.B. ein Einstechen unter einem Winkel von 45 Grad erfolgen, so entspricht die Bewegung in der X-Achse der Bewegung in der Z-Achse.

Das Graphikprogramm ist so ausgestaltet, dass es entsprechend dem ausgewählten Bearbeitungsschritt die zeitliche Kopplung der Achsen mitberücksichtigt. Verändert deshalb der Benutzer z.B. im Fenster 21 die Ausgangszustellkurve 29, so verändert sich die Ausgangszustellkurve 29' im Fenster 22 automatisch mit. Im Beispiel gemäss Fig. 8 hat das Graphikprogramm bewirkt, dass beim Verändern der Ausgangszustellkurve 29 im Fenster 21 die Punkte P2' und P3' verschoben und die Punkte P1a' und P2a' hinzugefügt worden sind.

Ist die Veränderung der Zustellkurven 30, 30' beendet, erzeugt der Computer 17 ein Steuerungsprogramm, welches Steuerbefehle zum Verfahren des Werkzeugs umfasst und welches in der Steuereinheit des Werkzeugs einlesbar ist.

Im hier gezeigten Beispiel sind die X-Koordinate des Punktes P1 und die Z-Koordinate von P1' durch die Basiszustellfunktion vorgegeben. Die Werte für diese Koordinaten sind genügend gross gewählt, so dass bei den üblichen Bearbeitungen die Schleifscheibe erst nach dem Zeitpunkt t = 0 auf die Werkstückoberfläche trifft, beispielsweise ist X = 0.3 mm und Z = 0.15 mm bei t = 0. Im Fall, dass ein Werkstück bearbeitet werden soll, bei welchem eine zu grosse Differenz zwischen Rohmass und Endmass besteht und somit die Schleifscheibe schon vor dem Zeitpunkt t = 0 das Werkstück kontaktieren würde, kann der Benutzer die Ausgangskurve 29 bzw. 29' mit den oben erwähnten Veränderungsmöglichkeiten so anpassen, dass die Schleifscheibe erst nach t = 0 auf die Werkstückoberfläche trifft.

Wie oben erwähnt, ist es auch denkbar, das Graphikprogramm mit einem Modellierbereich zu versehen. Dieser kann z.B. so ausgestaltet sein, dass der Computer aus der Basiszustellfunktion und aus den eingegebenen geometrischen Daten eine Ausgangszustellfunktion bestimmt.

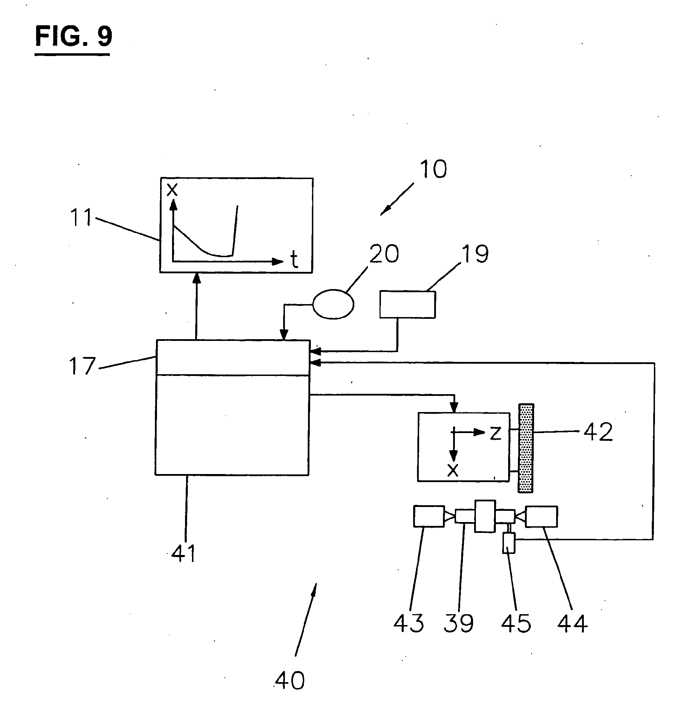

Fig. 9 zeigt ein Ausführungsbeispiel einer Bearbeitungsmaschine 40, bei welcher die Eingabevorrichtung 10 mit Monitor 11, Computer 17, Tastatur 19 und Zeigegerät 20 integriert ist.

Die Bearbeitungsmaschine 40 ist als Rundschleifmaschine ausgebildet und umfasst nebst der Schleifscheibe als Werkzeug 42 eine Steuereinheit 41 sowie einen Werkstückspindelstock 43 und einen Reitstock 44 zum Halten und Antreiben eines zu bearbeitenden Werkstücks 39. Die Schleifscheibe 42 ist um die Schleifachse rotierbar und in X- und Z-Richtung verfahrbar. Die Steuereinheit 41 ist mit dem verfahrbaren Werkzeug 42 verbunden und bildet zusammen mit dem Computer 17 eine CNC-Steuerung. Wie oben erläutert, hat die Zustellfunktion ihren Nullpunkt beim Endmass. Die CNC-Steuerung ist so eingerichtet, dass sie aus der vorgegebenen Zustellfunktion und den im Fenster 24 des Monitors 11 eingegebenen geometrischen Daten ein Steuerprogramm erzeugt, welches zu einer derartigen Bewegung des Werkzeugs 42 im Raum führt, dass dieses das Endmass an der richtigen Stelle in Bezug auf die Werkstückoberfläche erreicht.

Durch Eingabe eines Bestätigungssignals wird der Bearbeitungsprozess gestartet. Die Steuereinheit 41 erzeugt anhand des Steuerprogramms Steuerungssignale, welche vom Werkzeug 42 empfangen werden, sodass dieses entsprechend entlang den Achsen bewegt wird und das Werkstück 39 bearbeitet.

Optional weist die Bearbeitungsmaschine 40 eine mit dem Computer 17 verbundene Messeinrichtung 45 auf, mit welcher während der Bearbeitung des Werkstücks 39 Messgrössen wie Durchmesser und bestimmte Längen am Werkstück 39 erfassbar sind. Die erfassten Messgrössen werden im Computer 17 gespeichert und für die jeweilige Achse als Ist-Kurve zusammen mit der Zustellkurve auf dem Monitor 11 dargestellt. Die Ist-Kurve gibt z.B. den zeitlichen Verlauf des Werkstückdurchmessers wieder. Die eingegebene Zustellkurve entspricht der Soll-Kurve. Durch Vergleich von Ist-Kurve und Soll-Kurve kann der Bediener beurteilen, ob die Werkstückbearbeitung z.B. hinsichtlich Zeit und/oder Qualität noch optimiert werden kann.

Optional ist die Messeinrichtung 45 Teil eines Regelkreises, mittels welchem Abweichungen der Ist-Werte von den SollWerten während des Fertigungsprozesses korrigiert werden.

Das soweit beschriebene Verfahren, die Eingabevorrichtung sowie die Bearbeitungsmaschine haben u.a. folgende Vorteile:
- Die Eingabe der Zustellfunktion wird durch die graphische Darstellung sowie die Möglichkeit der graphischen Veränderung erleichtert. Diese erfolgt mittels Zeigegerät, sodass der Bediener keine Zahlen einzugeben braucht und daher die Gefahr einer Fehleingabe verringert ist.
- Es können praktisch beliebige Zustellfunktionen eingegeben werden. Verglichen mit der Zustellfunktion, wie sie beispielsweise in Figur 1 dargestellt ist, können beliebig viele Umschaltpunkte definiert werden.

Aus der vorangehenden Beschreibung sind dem Fachmann zahlreiche Abwandlungen zugänglich, ohne den Schutzbereich der Erfindung zu verlassen, der durch die Ansprüche definiert ist. So können anstelle der Computer-Maus oder ergänzend zu dieser folgende Zeigegeräte verwendet werden: Touchscreen, Trackball, Touchpad. So kann beispielsweise der Monitor 11 als Touchscreen ausgebildet sein, wobei die Zustellkurve graphisch verändert wird, indem der Benutzer einen Stift oder einen seiner Finger über den Touchscreen führt.

Anstelle einer Schleifscheibe kann das hier beschriebene Verfahren zur Eingabe einer Zustellfunktion auch bei anderen Arten von Werkzeugen, wie Drehwerkzeug oder Fräswerkzeug verwendet werden.

Die Eingabevorrichtung 10 braucht nicht in der Bearbeitungsmaschine 40 integriert zu sein, sondern kann auch als separate Station ausgebildet sein. In diesem Fall wird das erzeugte Steuerungsprogramm über eine Verbindungsleitung oder mittels eines Datenträgers, beispielsweise einer Diskette, an die Steuereinheit 41 der Bearbeitungsmaschine 40 übertragen.

## Patentansprüche

1. Verfahren zum Ansteuern eines verfahrbaren Werkzeugs (42), insbesondere Schleifwerkzeugs, mittels einer Zustellfunktion, welche die zeitliche Bewegung des Werkzeugs in mindestens einer Achse vorgibt, wobei
eine Ausgangszustellfunktion in Form mindestens einer Ausgangszustellkurve (29, 29') auf einem Monitor (11) dargestellt wird, **dadurch gekennzeichnet, dass**
aus der Ausgangszustellfunktion und aus Eingaben, welche mittels eines Zeigegeräts (20) erfolgen, eine Zustellfunktion berechnet wird, welche als veränderte Ausgangszustellkurve (30, 30') auf dem Monitor (11) dargestellt wird, und
aus der Zustellfunktion Steuerbefehle zum Verfahren des Werkzeugs erzeugt werden.

2. Verfahren nach Anspruch 1, **dadurch gekennzeichnet, dass** das Zeigegerät (20) mindestens eine der folgenden Komponenten umfasst: Computer-Maus, Touchscreen, Trackball, Touchpad.

3. Verfahren nach einem der Ansprüche 1 bis 2, **dadurch gekennzeichnet, dass** die Ausgangszustellkurve (29, 29') in einem Koordinatensystem mit Ordinate und Abszisse dargestellt wird, wobei
die Ordinate oder Abszisse der Zeitachse entspricht und die Abszisse bzw. Ordinate der Position des Werkzeugs (42) in einer Achse.

4. Verfahren nach einem der Ansprüche 1 bis 3, **dadurch gekennzeichnet, dass** Messgrössen eines mittels des Werkzeugs (42) bearbeiteten Werkstücks (39) erfasst und in Form einer Ist-Kurve auf dem Monitor (11) dargestellt werden.

5. Verfahren nach einem der Ansprüche 1 bis 4, **dadurch gekennzeichnet, dass** die Ausgangszustellfunktion (29, 29') mittels einer Basiszustellfunktion, welche aus einer Sammlung von in einem Datenspeicher gespeicherten Basiszustellfunktionen ausgewählt wird, und/oder mittels eingegebenen Daten berechnet wird.

6. Eingabevorrichtung, mit welcher das Verfahren nach einem der vorangehenden Ansprüche durchführbar ist und welche mindestens einen Monitor (11), mindestens ein Zeigegerät (20) und einen Computer (17) umfasst, welcher mit dem Monitor und dem Zeigegerät verbunden ist, **dadurch gekennzeichnet, dass** der Computer mit einem Computerprogramm ausgestattet ist, bei dessen Ausführung das Verfahren durchführbar ist.

7. Eingabevorrichtung nach Anspruch 6, **dadurch gekennzeichnet, dass** das Zeigegerät (20) mindestens eine der folgenden Komponenten umfasst: Computer-Maus, Touchscreen, Trackball, Touchpad.

8. Bearbeitungsmaschine zum Bearbeiten von Werkstücken, welche folgende Komponenten umfasst:
eine Eingabevorrichtung (10) nach Anspruch 6 oder 7,
mindestens ein Werkzeug (42), welches gesteuert verfahrbar ist, und
mindestens eine Steuereinheit (41) zum Ansteuern des Werkzeugs, wobei der Computer (17) der Eingabevorrichtung mit der Steuereinheit verbunden ist.

9. Bearbeitungsmaschine nach Anspruch 8, **dadurch gekennzeichnet, dass** sie eine Messeinrichtung (45) umfasst zum Erfassen von Messgrössen während der Bearbeitung eines Werkstücks (39).

10. Bearbeitungsmaschine nach einem der Ansprüche 8 bis 9, **dadurch gekennzeichnet, dass** sie eine Schleifscheibe als Werkzeug (42), einen Werkstückspindelstock (43) und einen Reitstock (44) umfasst.

11. Computerprogramm, wobei bei dessen Ausführung auf einem Computer das Verfahren nach einem der Ansprüche 1 bis 5 durchgeführt wird.

12. Datenträger, auf welchem das Computerprogramm nach Anspruch 11 gespeichert ist.

## Claims

1. Method for controlling a movable tool (42), in particular a grinding tool, by means of a feed function that specifies the movement of the tool in time in at least one axis, wherein
an initial feed function in the form of at least one initial feed curve (29, 29') is displayed on a monitor (11), **characterised in that**
from the initial feed function and from inputs effected by means of a pointing device (20), a feed function is calculated and displayed as a modified initial feed curve (30, 30') on the monitor (11), and
control commands for moving the tool are produced from the feed function.

2. Method according to claim 1, **characterised in that** the pointing device (20) comprises at least one of the following components: computer mouse, touchscreen, trackball, touchpad.

3. Method according to any one of claims 1 to 2, **characterised in that** the initial feed curve (29, 29') is displayed in a co-ordinate system with ordinate and abscissa, wherein
the ordinate or the abscissa corresponds to the time axis and the abscissa or the ordinate, respectively, corresponds to the position of the tool (42) in an axis.

4. Method according to any one of claims 1 to 3, **characterised in that** measured variables of a workpiece (39) being machined by the tool (42) are acquired and displayed in the form of an actual curve on the monitor (11).

5. Method according to any one of claims 1 to 4, **characterised in that** the initial feed function (29, 29') is calculated by means of a basic feed function that is selected from a collection of basic feed functions stored in a data memory, and/or by means of entered data.

6. Input device with which the method according to any one of the preceding claims can be implemented and which comprises at least one monitor (11), at least one pointing device (20) and a computer (17) that is connected to the monitor and the pointing device, **characterised in that** the computer is equipped with a computer program, on the running of which the method can be carried out.

7. Input device according to claim 6, **characterised in that** the pointing device (20) comprises at least one of the following components: computer mouse, touchscreen, trackball, touchpad.

8. Machine tool for machining workpieces, which comprises the following components:
an input device (10) according to claim 6 or 7,
at least one tool (42), which is movable under control, and
at least one control unit (41) for controlling the tool, the computer (17) of the input device being connected to the control unit.

9. Machine tool according to claim 8, **characterised in that** it comprises a measuring device (45) for acquiring measured variables during machining of a workpiece (39).

10. Machine tool according to any one of claims 8 to 9, **characterised in that** it comprises a grinding wheel as the tool (42), a workpiece headstock (43) and a tailstock (44).

11. Computer program, wherein on running thereof on a computer the method according to any one of claims 1 to 5 is carried out.

12. Data medium on which the computer program according to claim 11 is stored.

## Revendications

1. Procédé de commande d'un outil (42) déplaçable, plus particulièrement outil de rectification, au moyen d'une fonction d'avance qui définit le mouvement dans le temps de l'outil selon au moins un axe, où
une fonction d'avance initiale sous la forme d'au moins une courbe d'avance initiale (29, 29') est affichée sur un moniteur (11), **caractérisé en ce que**
à partir de la fonction d'avance initiale et d'entrées effectuées au moyen d'un dispositif de pointage (20), une fonction d'avance est calculée qui est affichée sur le moniteur (11) en tant que fonction d'avance initiale modifiée (30, 30'), et
à partir de la fonction d'avance, des instructions de commande pour le déplacement de l'outil sont générées.

2. Procédé selon la revendication 1, **caractérisé en ce que** le dispositif de pointage (20) comprend au moins un des composants suivants: souris d'ordinateur, écran tactile, boule de commande, pavé tactile.

3. Procédé selon l'une quelconque des revendications 1 à 2, **caractérisé en ce que** la courbe d'avance initiale (29, 29) est représentée dans un système de coordonnées avec ordonnée et abscisse,
l'ordonnée ou l'abscisse correspondant à l'axe du temps et l'abscisse ou l'ordonnée, respectivement, à la position de l'outil (42) sur un axe.

4. Procédé selon l'une quelconque des revendications 1 à 3, **caractérisé en ce que** des grandeurs mesurées d'une pièce (39) usinée à l'aide de l'outil (42) sont saisies et affichées sur le moniteur (11) sous la forme d'une courbe effective.

5. Procédé selon l'une quelconque des revendications 1 à 4, **caractérisé en ce que** la fonction d'avance initiale (29, 29') est calculée à l'aide d'une fonction d'avance de base qui est choisie parmi une collection de fonctions d'avance de base enregistrées dans une mémoire de données, et/ou à l'aide de données entrées.

6. Dispositif d'entrée permettant la mise en oeuvre du procédé selon l'une quelconque des revendications précédentes et qui comprend au moins un moniteur (11), au moins un dispositif de pointage (20) et un ordinateur (17) relié au moniteur et au dispositif de pointage, **caractérisé en ce que** l'ordinateur est équipé d'un programme d'ordinateur lors de l'exécution duquel le procédé est exécutable.

7. Dispositif d'entrée selon la revendication 6, **caractérisé en ce que** que le dispositif de pointage (20) comprend au moins un des composants suivants: souris d'ordinateur, écran tactile, boule de commande, pavé tactile.

8. Machine d'usinage pour usiner des pièces, comprenant les composants suivants:
un dispositif d'entrée (10) selon la revendication 6 ou 7,
au moins un outil (42) déplaçable sous commande, et
au moins une unité de commande (41) pour la commande de l'outil, l'ordinateur (17) du dispositif d'entrée étant relié à l'unité de commande.

9. Machine d'usinage selon la revendication 8, **caractérisée en ce qu'**elle comprend un dispositif de mesure (45) pour saisir des grandeurs mesurées en cours d'usinage d'une pièce (39).

10. Machine d'usinage selon l'une quelconque des revendications 8 à 9, **caractérisée en ce qu'**elle comprend une meule en tant qu'outil (42), une tête de broche (43) et une contrepoupée (44).

11. Programme d'ordinateur lors de l'exécution duquel sur un ordinateur est mis en oeuvre le procédé selon l'une quelconque des revendications 1 à 5.

12. Support de données sur lequel est enregistré le programme d'ordinateur selon la revendication 11.
